# EUROPÄISCHE PATENTSCHRIFT

(11) **EP 2 396 200 B1**
(45) Veröffentlichungstag und Bekanntmachung des Hinweises auf die Patenterteilung: **27.03.2013**
(21) Anmeldenummer: 10724706.6
(22) Anmeldetag: 27.05.2010
(51) Int. Cl.: B60T 1/087, B60T 10/02, B60K 17/22, H02K 49/04

(54) **KRAFTFAHRZEUG MIT EINEM RETARDER**
MOTOR VEHICLE HAVING A RETARDER
VÉHICULE À MOTEUR POURVU D'UN RALENTISSEUR

(30) Priorität: 27.05.2009 DE 102009022872
(43) Veröffentlichungstag der Anmeldung: 21.12.2011
(73) Patentinhaber: Voith Turbo Smi Technologies GmbH&Co. Kg, 74564 Crailsheim (DE)
(72) Erfinder: ADAMS, Werner, 74564 Crailsheim (DE); KULHANEK, Hans-Martin, 74564 Crailsheim (DE); FOEHL, Bruno, 74586 Frankenhardt (DE); WEIGEL, Alfred, 74597 Stimpfach (DE); POMEREINKE, Horst, 74564 Crailsheim (DE); LAUX, Otto, 74579 Fichtenau (DE); DOERR, Herbert, 74586 Frankenhardt (DE); BRUECKNER, Andreas, 91575 Windsbach (DE); REINMUTH, Steffen, 74937 Spechbach (DE)
(74) Vertreter: Dr. Weitzel & Partner
(86) Internationale Anmeldenummer: PCT/EP2010/003220
(87) Internationale Veröffentlichungsnummer: WO 2010/136201

(56) Entgegenhaltungen:
- FR-A1- 2 814 003
- JP-A- 7 285 423
- US-A- 3 871 466

## Beschreibung

Die vorliegende Erfindung betrifft ein Kraftfahrzeug mit einem Retarder, im Einzelnen gemäß dem Oberbegriff von Anspruch 1.

Retarder werden in Kraftfahrzeugen zum verschleißfreien Abbremsen des Fahrzeugs eingesetzt. Man unterscheidet zwischen verschiedenen Retardertypen, wie hydrodynamischer Retarder, Elektromagnetretarder, auch elektrodynamischer Retarder oder Wirbelstrombremse genannt, und Permanentmagnetretarder. Die vorliegende Erfindung betrifft jegliche Art von Retardern, ist jedoch besonders für die Verwendung mit einem Permanentmagnetretarder geeignet.

Hydrodynamische Retarder weisen einen Rotor und einen Stator auf, die miteinander einen mit Arbeitsmedium befüllten oder befüllbaren Arbeitsraum ausbilden. Durch Antreiben des Rotors bildet sich eine drehmomentübertragende Arbeitsmediumkreislaufströmung im Arbeitsraum aus, mittels welcher Drehmoment vom Rotor auf den Stator übertragen wird, was, da der Stator stationär gehalten ist, zu einem Abbremsen des umlaufenden Rotors führt. Die Höhe des Bremsmomentes kann beispielsweise durch Verändern des Füllungsgrades des Arbeitsraumes eingestellt werden.

Bei Elektromagnetretardern (Wirbelstrombremsen) wird mittels Elektromagneten ein Magnetfeld erzeugt, in welchem ein Rotor aus magnetisierbarem Material umläuft. Durch Beaufschlagung des Rotors mit dem Magnetfeld wird dieser abgebremst. Prinzipiell ist es natürlich auch möglich, die Elektromagneten im Rotor vorzusehen und das magnetisierbare Material im Stator.

Beim Permanentmagnetretarder sind im Stator Permanentmagneten angeordnet, welche ein Magnetfeld wahlweise erzeugen, in welchem der Rotor, der aus magnetisierbarem Material hergestellt ist, rotiert. Die Position der Permanentmagneten und/oder eines diesen zugeordneten Bauteils, beispielsweise eines Polschuhs ist derart veränderbar, dass in einem ersten Zustand keine Magnetkraft auf den Rotor wirkt, und in einem zweiten Zustand die maximale Magnetkraft auf den Rotor wirkt. Beispielsweise können die Magneten im ausgeschalteten Zustand derart überbrückt werden, dass keine Magnetkraft zum Rotor fließt, und im eingeschalteten Zustand wird die Überbrückung aufgehoben. Auch Zustände mit verminderter Magnetkraft zum Einstellen eines variablen Bremsmomentes können vorgesehen werden.

Obwohl die bekannten Arten von Retardern aufgrund ihres Vermögens, das Fahrzeug verschleißfrei abzubremsen, zahlreiche Vorteile mit sich bringen, bedeutet die Integration im Fahrzeug immer einen baulichen Mehraufwand, besonders durch zusätzlich vorgesehene Wälzlager oder Gleitlager, die den Rotor des Retarders drehbar tragen. Dies ist besonders dann der Fall, wenn der Retarder im Bereich der Gelenkwelle eines Fahrzeugs, welche das Fahrzeuggetriebe mit den Antriebsrädern beziehungsweise einem Achsgetriebe auf der Achse der Antriebsräder verbindet, angeordnet werden soll, da dann Modifikationen der Gelenkwelle notwendig sind. In der Regel wird die Gelenkwelle gekürzt oder unterbrochen und der Retarder wird mit seiner eigenen Lagerung an der gekürzten oder den beiden unterbrochenen Teilen der Gelenkwelle angeschlossen. Die Lagerung des Retarders muss neben axialen und radialen Kräften häufig auch Biegekräfte aufnehmen und besteht deshalb meist aus zwei Lagern mit axialem Abstand zueinander.

Es ist leicht verständlich, dass diese Art der Lagerung teuer und schwer ist.

JP 7 285423 A offenbart ein Kraftfahrzeug mit einem Retarder mit einer elehtromagnetischen Krafterzeugung.

Das Dokument US 3 871 466 A beschreibt einen Elektromagnetretarder, dessen Stator mit den Elektromagneten am Chassis eines Fahrzeug aufgehängt ist und welcher über eine Wälzlagerung eine Verbindungswelle trägt, die einerseits zwei Kreuzgelenkwellen auf der Abtriebseite des Getriebes miteinander verbindet und andererseits den Rotor des Retarders, der den Stator mit den Elektromagneten in Axialrichtung beidseitig einschließt, trägt. Nachteilig an dieser Ausführungsform ist, dass der Einbau eines solchen Retarders in einen bestehenden Antriebsstrang eine Vielzahl von getriebeabtriebsseitigen Gelenkwellen erfordert, was einerseits konstruktiv aufwändig und kostenintensiv ist und andererseits zu Drehschwingungsproblematiken beziehungsweise Unwuchten führen kann. Besonders gravierend ist ferner der bekannte Winkelfehler von Kreuzgelenkwellen, der durch die Vielzahl von Kreuzgelenkwellen aufaddiert wird.

Der vorliegenden Erfindung liegt die Aufgabe zugrunde, ein Kraftfahrzeug mit einem Retarder anzugeben, dass sich durch eine kostengünstige Integration des Retarders im Bereich der Gelenkwelle bei zugleich zuverlässiger Lagerung der im Antriebsstrang vorhandenen Bauteile auszeichnet.

Die erfindungsgemäße Aufgabe wird durch ein Kraftfahrzeug mit den Merkmalen von Anspruch 1 gelöst. In den abhängigen Ansprüchen sind vorteilhafte und besonders zweckmäßige Ausgestaltungen der Erfindung angegeben.

Das erfindungsgemäße Kraftfahrzeug weist einen Antriebsmotor und ein dem Antriebsmotor im Kraftfluss nachgeschaltetes Getriebe auf. Das Getriebe überträgt Antriebsleistung des Antriebsmotors mit wählbaren Übersetzungen auf Antriebsräder des Fahrzeugs, wie bekannt, in der Regel über ein Achsgetriebe, Differenzial oder dergleichen.

Zwischen dem Getriebe und den Antriebsrädern ist im Antriebsstrang des Kraftfahrzeugs eine Gelenkwelle vorgesehen, welche Antriebsleistung von einer abtriebsseitigen Getriebeausgangswelle auf die Antriebsräder, in der Regel über ein Achsgetriebe auf der oder an der Antriebsachse der Antriebsräder überträgt. Die Gelenkwelle kann unmittelbar oder mittelbar an der Getriebeausgangswelle angeschlossen sein.

Ferner weist das Fahrzeug einen Fahrzeugrahmen auf, welcher dem Fahrzeug Stabilität verleiht und an welchem der Antriebsmotor, das Getriebe, die Gelenkwelle und die Antriebsräder zumindest mittelbar aufgehängt oder gelagert sind. In der Regel werden weitere Bauteile durch den Fahrzeugrahmen, wie beispielsweise eine Karosserie und dergleichen, getragen.

Das Fahrzeug ist mit einem Retarder ausgestattet, der die Bauart eines hydrodynamischen Retarders, Elektromagnetretarders (Wirbelstrombremse) oder Permanentmagnetretarders aufweisen kann, wie sie eingangs erläutert worden ist. Der Retarder umfasst zumindest einen Rotor und einen Stator, welche, wie dargestellt, über einen hydrodynamischen Arbeitsmediumkreislauf oder ein Magnetfeld in eine drehmomentübertragende Verbindung schaltbar sind, sodass der Rotor durch diese Drehmomentübertragung auf den Stator abgebremst wird. Der Rotor steht in einer Triebverbindung mit den Antriebsrädern des Fahrzeugs und kann diese so abbremsen, wenn der Retarder eingeschaltet wird.

Erfindungsgemäß ist nun der Rotor des Retarders außen auf der Gelenkwelle montiert und wird durch die Gelenkwelle getragen. Dies bedeutet, dass kein zusätzliches Lager zum Tragen des Retarderrotors erforderlich ist, welches bei dem Fahrzeug nicht ohnehin zur Lagerung der Gelenkwelle vorgesehen wäre, wenn das Fahrzeug ohne Retarder ausgestattet wäre. Es kann demnach auf ein eigenes Lager für den Rotor des Retarders verzichtet werden.

Das erfindungsgemäße Merkmal, dass der Rotor durch die Gelenkwelle getragen wird, bedeutet, dass auf den Rotor wirkende Kräfte in Axialrichtung und/oder Radialrichtung beziehungsweise Umfangsrichtung von der Gelenkwelle, insbesondere ausschließlich von der Gelenkwelle aufgenommen werden. Diese Kräfte werden demnach nicht über eine zusätzliche Lagerung abgeführt.

Der Stator ist mittels eines Retarderlagers auf dem Rotor relativgelagert und wird vom Rotor getragen. Um ein Umlaufen des Stators mit dem Rotor zu verhindern, stützt sich der Stator über eine Drehmomentstütze zumindest mittelbar am Fahrzeugrahmen gegen Verdrehung ab. Bis auf diese Abstützung mittels der Drehmomentstütze kann der Stator vorteilhaft frei von einer kraftübertragenden Anbindung und/oder Lagerung am Fahrzeugrahmen sein und ausschließlich durch den Rotor getragen werden. Somit sind nur Maßnahmen notwendig, die eine Montage des Rotors an der Gelenkwelle ermöglichen, ohne dass eine weitere Lagerung für den Stator am Fahrzeugrahmen erforderlich ist.

Besonders vorteilhaft ist der Rotor des Retarders in Axialrichtung und Radialrichtung starr an der Gelenkwelle angeschlossen, beispielsweise angeschraubt oder aufgepresst. Prinzipiell ist auch eine integrale Ausführung des Rotors mit der Gelenkwelle möglich, was jedoch eine Modifikation der Gelenkwelle gegenüber Fahrzeugen ohne Retarder erforderlich machen kann.

Der Rotor des Retarders ist gemäß einer Ausführungsform mit einem vorbestimmten Abstand gegenüber beiden axialen Enden der Gelenkwelle angeordnet, beispielsweise im Bereich der axialen Mitte der Gelenkwelle. Der Bereich der axialen Mitte umfasst dabei nicht nur exakt die axiale Mitte, sondern auch einen entsprechenden Bereich vor und hinter der axialen Mitte, beispielsweise das mittlere Drittel der Gelenkwelle. Selbstverständlich sind andere Bereichsabgrenzungen möglich. Jedoch ist es auch möglich, den Retarder beziehungsweise dessen Rotor an einer anderen Position der Gelenkwelle anzuordnen, beispielsweise auf einem axialen Ende oder im Bereich eines axialen Endes.

Das Retarderlager, mittels welchem der Stator auf dem Rotor relativgelagert ist, ist vorteilhaft als Wälzlager, beispielsweise Rillenkugellager, ausgeführt und insbesondere unmittelbar zwischen dem Rotor und dem Stator angeordnet.

Herkömmlich sind verhältnismäßig lange Gelenkwellen, insbesondere in Nutzfahrzeugen, wie einem Lkw oder Schienenfahrzeug, über ein sogenanntes Zwischenlager in ihrem axial mittleren Bereich am Fahrzeugrahmen gelagert. Im Bereich dieses Zwischenlagers kann nun der erfindungsgemäß integrierte Retarder positioniert werden.

Das Zwischenlager kann vorteilhaft über ein elastisches Element, insbesondere ein Elastomer- oder Gummielement, am Fahrzeugrahmen angeschlossen sein.

Das Zwischenlager wird in der Regel durch einen Querträger des Fahrzeugrahmens, der zwei Längsträger des Fahrzeugrahmens, bezogen auf die Fahrzeuglängsachse, verbindet, getragen.

Obwohl ein solches Zwischenlager zunächst augenscheinlich in sich selbst nur äußerst begrenzte Möglichkeiten bietet, Biegekräfte aufzunehmen, wie sie durch Rotation des Retarderrotors auftreten können, ergibt sich in Kombination mit einer entsprechend biegesteifen Lagerung der Getriebeausgangswelle im Fahrzeuggetriebe durch den Hebelarm der Gelenkwelle zwischen der Getriebeausgangswelle und dem Rotor eine äußerst biegesteife Gesamtlagerung.

Die Gelenkwelle zwischen der Getriebeausgangswelle und dem Rotor des Retarders kann vorteilhaft frei von einem Längenausgleich, beispielsweise einem Schiebestück zwischen dem Getriebe und dem Zwischenlager, sein. Bei einer elastischen Aufhängung des Zwischenlagers ist es ferner möglich, die Steifigkeit der Aufhängung in radialer Richtung abweichend zur Steifigkeit in axialer Richtung, bezogen auf die Gelenkwelle, auszuführen. Besonders vorteilhaft wird in axialer Richtung eine vergleichsweise geringere Steifigkeit und in radialer Richtung eine höhere Steifigkeit eingestellt.

Die Gelenkwelle weist gemäß einer Ausführungsform zumindest zwei Gelenke, bei einer anderen Ausführungsform auch drei oder mehr Gelenke auf. Die Gelenke können beispielsweise als Kreuzgelenke ausgeführt sein. Mittels einer solchen Gelenkwelle ist es möglich, das Getriebe in einer anderen, insbesondere horizontalen, Ebene zu positionieren als die Antriebsachse beziehungsweise das Achsgetriebe der Antriebsachse für die Antriebsräder.

Gemäß einer vorteilhaften Ausführungsform ist die Gelenkwelle als Kreuzgelenkwelle ausgeführt, mit einem Kreuzgelenkwellenflansch, der ein Zapfenkreuz trägt. Der Kreuzgelenkwellenflansch weist eine oder mehrere in Radialrichtung hervorstehende Aufnahmen auf, die beispielsweise am Kreuzgelenkwellenflansch angeschmiedet sein können. Beispielsweise kann eine einzige in Umfangsrichtung umlaufende radial hervorstehende Aufnahme vorgesehen sein, oder, gemäß einer anderen vorteilhaften Ausführungsform, zwei sich über dem Umfang gegenüberstehende Aufnahmen. Der Rotor kann nun an der Aufnahme oder den Aufnahmen montiert sein, insbesondere angeschraubt sein.

Gemäß einer günstigen Ausführungsform umschließt der Rotor den Stator in Umfangsrichtung radial von außen. Zusätzlich oder alternativ kann der Rotor einen inneren Tragring aufweisen, der sich radial innerhalb des Stators erstreckt und an welchem der Stator mittels des Retarderlagers relativgelagert ist, insbesondere mittels eines zwischen dem Tragring und dem Stator angeordneten Wälzlagers. Hierbei kann der Tragring die Gelenkwelle, insbesondere einen zylindrischen Axialabschnitt derselben, mit einem Spiel oder einem Abstand umschließen, wobei vorliegend als Spiel ein besonders kleiner Abstand bezeichnet wird.

Wenn der Retarder als Permanentmagnetretarder ausgeführt ist, trägt dessen Stator vorteilhaft eine Vielzahl von in Umfangsrichtung über der Drehachse hintereinander mit alternierender Polung angeordneten Permanentmagneten, und der Rotor umfasst wenigstens einen oder mehrere den Permanentmagneten zugewandte Bereiche aus magnetisierbarem Material. Ferner ist vorteilhaft ein Schaltelement zwischen den Permanentmagneten und dem wenigstens einen Bereich aus magnetisierbarem Material vorgesehen, wobei sich das Schaltelement derart scheibenförmig, ringförmig oder ringsegmentförmig in Umfangsrichtung über der Drehachse zwischen dem Rotor und dem Stator erstreckt, dass sich magnetisierbare Rückschlusselemente mit nicht magnetisierbaren Zwischenelementen des Schaltelementes in der Umfangsrichtung abwechseln. Ferner ist dann wenigstens ein Aktuator vorgesehen, mittels welchem die Permanentmagneten gegenüber dem Schaltelement und/oder das Schaltelement gegenüber den Permanentmagneten in der Umfangsrichtung wechselseitig verdrehbar ist beziehungsweise sind, um in einer ersten Position die Rückschlusselemente den Permanentmagneten gegenüberzustellen und in einer zweiten Position die Zwischenelemente den Permanentmagneten gegenüberzustellen. Hierdurch kann der Permanentmagnetretarder ein- und ausgeschaltet werden, indem immer dann, wenn in der ersten Position die Rückschlusselemente den Permanentmagneten gegenüberstehen, sich ein Magnetfeld vom Stator über die Rückschlusselemente in den Rotor und zurück in den Stator einstellt, sodass der Rotor abgebremst wird. Wenn hingegen in der zweiten Position die Zwischenelemente den Permanentmagneten gegenüberstehen, so schließen die Rückschlusselemente jeweils zwei in Umfangsrichtung benachbart zueinander angeordnete Permanentmagneten mit gegenseitiger Polung kurz, sodass sich nur ein "kleiner" magnetischer Kreislauf beziehungsweise ein kreisförmiges Magnetfeld zwischen den Permanentmagneten und den Rückschlusselementen einstellt, welches nicht über die Systemgrenze zwischen Rotor und Stator hinwegreicht und somit nicht sowohl den Rotor als auch den Stator durchfließt. Demgemäß kann der Rotor frei oder im Wesentlichen ohne Abbremsung durch ein magnetisches Feld gegenüber dem Stator umlaufen, der Permanentmagnetretarder ist ausgeschaltet.

Die Erfindung soll nachfolgend anhand von Ausführungsbeispielen und den Figuren exemplarisch erläutert werden.

Es zeigen:
- Figur 1: eine schematische Draufsicht auf ein Fahrzeug mit Darstellung der Positionierung der Gelenkwelle im Fahrzeugantriebsstrang;
- Figur 2: eine vergrößerte Darstellung der Gelenkwelle aus der Figur 1;
- Figur 3: ein erstes Ausführungsbeispiel der erfindungsgemäßen Anordnung eines Permanentmagnetretarders auf der Gelenkwelle;

- Figur 4: eine alternative Anschlussmöglichkeit für den Rotor am Kreuzgelenkwellenflansch durch angeschmiedete ohrenförmige Aufnahmen;
- Figur 5: eine schematische Darstellung einer Ausführungsform mit Permanentmagnetretarder im eingeschalteten Zustand;
- Figur 6: die Ausführungsform aus der Figur 5 im ausgeschalteten Zustand;
- Figur 7: einen Axialschnitt durch einen Permanentmagnetretarder gemäß den Figuren 5 und 6;
- Figur 8: eine dreidimensionale Ansicht des Permanentmagnetretarders aus der Figur 7.

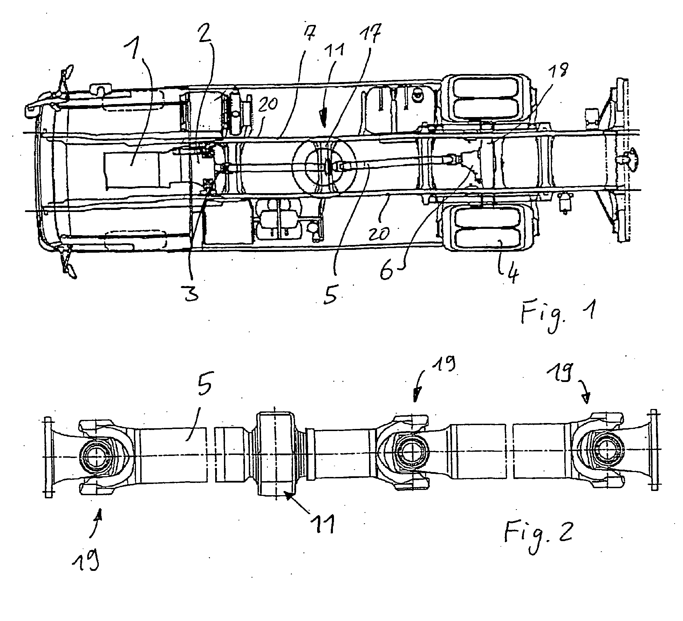

In der Figur 1 erkennt man eine schematische Draufsicht auf ein Fahrzeug mit einem Antriebsmotor 1, mit einem Getriebe 2 und Antriebsrädern 4. Die Antriebsräder werden über eine Antriebsachse 18 angetrieben, welcher wiederum ein Achsgetriebe 6, beispielsweise ein Differenzialgetriebe, zugeordnet ist. Um die Antriebsleistung des Antriebsmotors 1 vom Getriebe 2 auf das Achsgetriebe 6 zu übertragen, wobei das Achsgetriebe 6 in einer anderen Ebene angeordnet ist als das Getriebe 2, ist eine Gelenkwelle 5 vorgesehen, welche die Getriebeausgangswelle 3 mit dem Achsgetriebe 6 verbindet. Die Gelenkwelle 5 ist an ihrem ersten, antriebsseitigen axialen Ende über die Getriebeausgangswelle 3 im Getriebe 2 gelagert, und an ihrem zweiten, abtriebsseitigen axialen Ende über eine Eingangswelle des Achsgetriebes 6 am Achsgetriebe 6 und/oder über dieses auf der Antriebsachse 18.

Ferner ist im Bereich der axialen Mitte der Gelenkwelle 5, vorliegend betrachtet in Richtung des Antriebsleistungsflusses vom Motor 1 zu den Antriebsrädern 4, vor dem zweiten von drei Gelenken der Gelenkwelle 5 die Gelenkwelle 5 über ein Zwischenlager 11 am Fahrzeugrahmen 7, genauer an einem Querträger 17 desselben, der zwei Längsträger 20 verbindet, aufgehängt.

In der Figur 2 ist nochmals die gesamte Gelenkwelle 5 mit dem darauf angeordneten Zwischenlager 11 und den drei Gelenken 19 dargestellt.

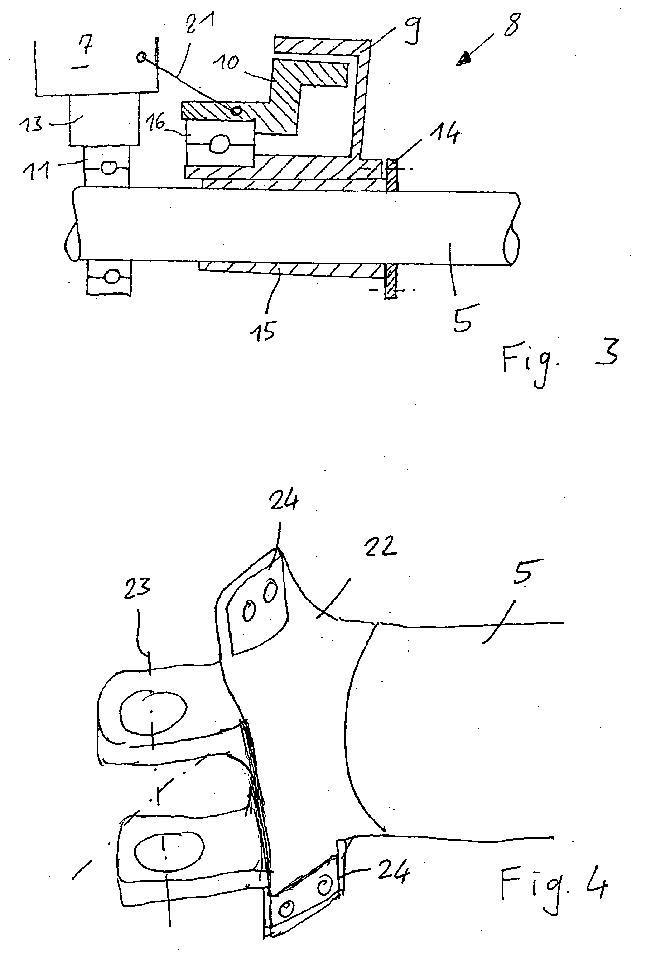

In der Figur 3 ist eine Ausgestaltung eines vollständig auf der Gelenkwelle 5 gelagerten Retarders, wiederum hier als Permanentmagnetretarder 8 ausgeführt, im Bereich des Zwischenlagers 11 gezeigt. Hierzu wird der Rotor 9 drehfest von der Gelenkwelle 5 getragen, und der Stator 10 ist auf dem Rotor 9 relativgelagert, und zwar mittels des Retarderlagers 16 radial zwischen Rotor 9 und Stator 10.

Die Relativlagerung mittels des Retarderlagers 16 bewirkt eine radiale und/oder axiale Abstützung des Stators 10 auf dem Rotor 9 beziehungsweise der Gelenkwelle 5, bei einer relativen Verdrehbarkeit gegenüber der Gelenkwelle 5 beziehungsweise dem Rotor 9. Um ein Umlaufen des Stators 10 mit dem Rotor 9 beziehungsweise der Gelenkwelle 5 zu verhindern, ist ferner eine Drehmomentstütze 21 am Stator 10 vorgesehen, mittels welcher sich der Stator 10 am Fahrzeugrahmen 7 oder einem an diesem angeschlossenen Bauteil abstützt.

Auch in der Figur 3 ist die Gelenkwelle 5 mittels eines Zwischenlagers 11 im Bereich ihrer axialen Mitte am Fahrzeugrahmen 7 aufgehängt, mit oder ohne elastischem Element 13, je nach Bedarf. Somit ist zur Integration des Retarders im Fahrzeug nur das Vorsehen eines einzigen zusätzlichen Lagers zwischen Rotor 9 und Stator 10 oder zwischen Gelenkwelle 5 und Stator 10 erforderlich und alle auf den Rotor 9 wirkenden Kräfte werden unmittelbar auf die Gelenkwelle 5 abgeleitet. Auch die auf den Stator 10 wirkenden Kräfte werden über das Retarderlager 16 auf die Gelenkwelle 5 abgeleitet, mit Ausnahme der Kräfte in Umfangsrichtung, welche über die Drehmomentstütze 21 auf den Fahrzeugrahmen 7 abgeleitet werden.

Bei dem in der Figur 3 dargestellten Ausführungsbeispiel ist der Rotor 9 über eine auf die Gelenkwelle 5 geschobene Hülse, hier als Spannhülse 15 ausgeführt, an der Gelenkwelle 5 kraftschlüssig beziehungsweise formschlüssig montiert. Natürlich könnten auch bei diesem Ausführungsbeispiel andere Möglichkeiten zur Montage des Rotors 9 an der Gelenkwelle 5 gewählt werden, siehe beispielsweise den schematisch angedeuteten Flansch 14 der Gelenkwelle 5, an welchem der Rotor 9 angeschraubt oder anders montiert sein könnte.

Die Figur 4 zeigt den Kreuzgelenkwellenflansch 22 der Gelenkwelle 5, welcher ein Zapfenkreuz 23 (nur schematisch angedeutet) trägt. Unmittelbar am Kreuzgelenkwellenflansch 22 sind zwei Aufnahmen 24 vorgesehen, vorteilhaft integral mit diesem ausgeführt, beispielsweise durch Anschmieden, an welche der Rotor des Retarders angeschraubt werden kann. Diese Ausführungsform hat sich als besonders günstig erwiesen, da durch die gewählte Positionierung der Aufnahmen 24 unmittelbar am Kreuzgelenkwellenflansch 22 Schwingungen weitgehend vermieden werden konnten, ja sogar Drehschwingungen der Gelenkwelle gedämpft werden konnten.

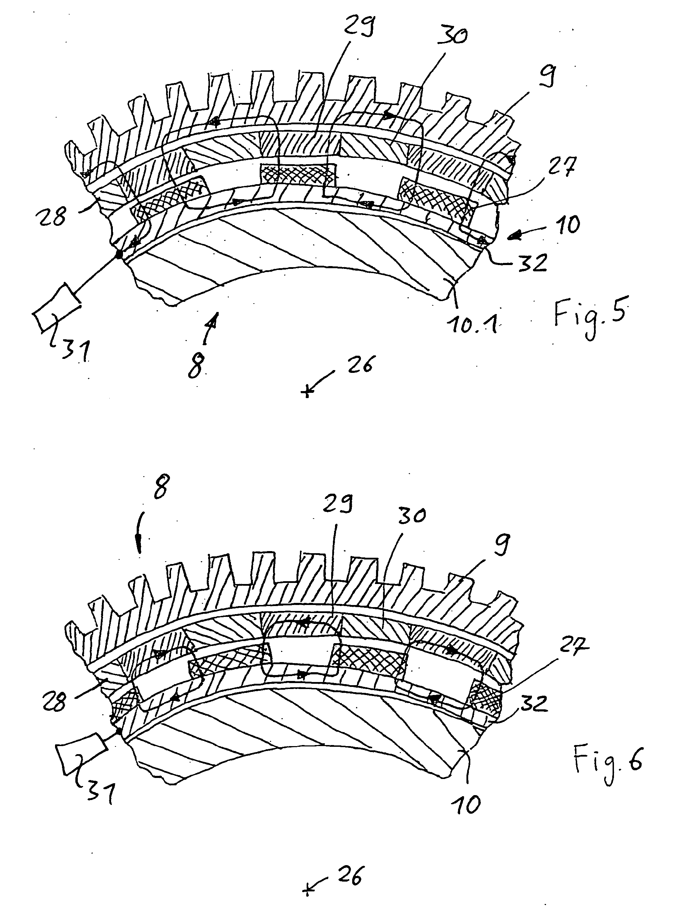

Bei dem in den Figuren 5 und 6 gezeigten Ausführungsbeispiel eines Permanentmagnetretarders, dessen Rotor 9 und Stator 10 erfindungsgemäß durch die Gelenkwelle getragen werden können, umschließt der Rotor 9 den Stator 10 in Umfangsrichtung. Der Rotor 9 dreht sich über der Drehachse 26 und ist konzentrisch zum Stator 10 angeordnet.

Der Stator 10 weist einen gegenüber einem radial inneren feststehenden Kernbereich 10.1 in Umfangsrichtung verschiebbaren ringförmigen Magnetenträger 32 auf, der eine Vielzahl von Permanentmagneten 27 trägt. Die Permanentmagneten 27 sind in Umfangsrichtung über der Drehachse 26 mit alternierender Polung hintereinander angeordnet, das heißt alle Permanentmagneten 27 in der Abfolge mit gerader Positionsnummer weisen einen radial außenliegenden Nordpol und einen radial innenliegenden Südpol auf, und alle Permanentmagneten 27 mit ungerader Positionsnummer weisen einen radial außenliegenden Südpol und einen radial innenliegenden Nordpol auf.

In Radialrichtung zwischen dem Rotor 9 und dem Stator 10 ist ein Schaltelement 28 angeordnet, das insbesondere stationär ausgeführt sein kann, beispielsweise als Gehäuseschale des Stators 10. Das Schaltelement 28 hat eine Ringform und in Umfangsrichtung wechseln sich magnetisierbare Rückschlusselemente 29 mit nicht magnetisierbaren Zwischenelementen 30 ab. Die Rückschlusselemente 29 sind beispielsweise aus Stahl oder Eisen und die nicht magnetisierbaren Zwischenelemente aus Aluminium hergestellt.

Wenn nun, wie in der Figur 5 gezeigt ist, die Rückschlusselemente 29 den Permanentmagneten 27 in Radialrichtung gegenüberstehen, insbesondere fluchtend zueinander ausgerichtet sind, kann sich ein Magnetfeld ausbilden, das von dem Stator 10 bis in den Rotor 9 und zurück reicht. Wie gezeigt, reichen beispielsweise die äußeren Magnetflusslinien des Magnetfeldes von einem ersten Permanentmagneten 27 durch das gegenüberliegende erste Rückschlusselement 29 in den Rotor 9, der insbesondere aus Stahl oder Eisen hergestellt ist, in Umfangsrichtung entlang des Rotors 9, zurück durch ein zweites Rückschlusselement 29 radial nach innen durch einen zweiten Permanentmagneten 27 und zurück in entgegengesetzter Umfangsrichtung wie im Rotor 9 durch den Magnetenträger 32, der entsprechend auch aus Stahl oder Eisen hergestellt sein kann, erneut in den ersten Permanentmagneten 27. Wenn hingegen, wie in der Figur 6 dargestellt ist, die Zwischenelemente 30 den Permanentmagneten 27 in Radialrichtung gegenüberstehen, so überbrückt jeweils ein Rückschlusselement 29 zwei benachbart zueinander angeordnete Permanentmagneten 27, wodurch ein kleineres Magnetfeld erreicht wird, das nicht bis in den Rotor 9 hineinreicht.

Demgemäß übt bei der Position in der Figur 5, die vorliegend als erste Position bezeichnet wird, der Stator 10 mittels der Magnetfelder eine Bremswirkung auf den Rotor 9 aus, wohingegen in der als zweite Position bezeichneten Position gemäß der Figur 6 kein Bremsmoment durch ein Magnetfeld auf den Rotor 9 ausgeübt wird. In der ersten Position ist demnach der Permanentmagnetretarder 8 eingeschaltet, und in der zweiten Position ist der Permanentmagnetretarder 8 ausgeschaltet.

Zur begrenzten Verschiebung des Magnetenträgers 32 ist an diesem ein Aktuator 31 angeschlossen, der beispielsweise durch einen einfachwirkenden oder doppeltwirkenden Druckzylinder oder mehrere hiervon gebildet werden kann. Auch andere Aktuatorenformen sind möglich, beispielsweise elektrische oder pneumatische sowie hydraulische.

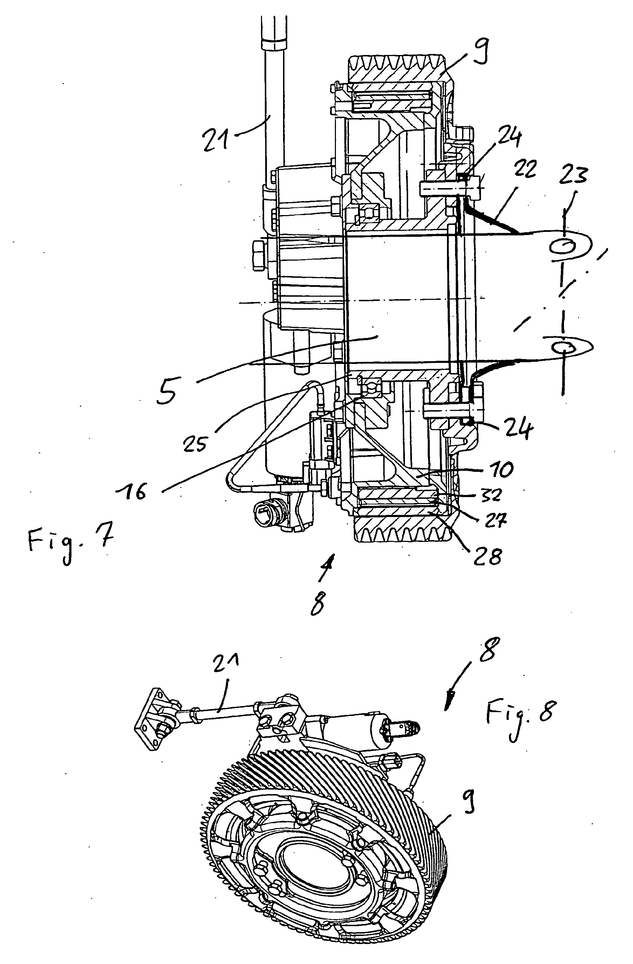

In der Figur 7 ist nun nochmals dargestellt, wie ein Permanentmagnetretarder 8 gemäß der Figuren 5 und 6 an einem Kreuzgelenkwellenflansch 22 gemäß der Figur 4 angeschlossen werden kann. Hierbei erkennt man die Aufnahmen 24, an welche der Rotor 9 angeschraubt ist.

Der Rotor 9 weist in dem gezeigten Ausführungsbeispiel einen inneren Tragring 25 auf, der sich radial innerhalb des Stators 10 erstreckt und auf welchem der Stator 10 mittels des Retarderlagers 16 relativgelagert ist.

Der innere Tragring 25 umschließt die Gelenkwelle 5, hier einen zylindrischen Teil derselben, der sich an den Kreuzgelenkwellenflansch 22 in Richtung des Permanentmagnetretarders 8 anschließt, mit einem vorgegebenen Abstand. Entsprechend der in den Figuren 5 und 6 gezeigten Ausführungsform umschließt der Rotor 9 den Stator 10 radial von außen. Der Stator 10 weist wiederum den Magnetenträger 32 mit den Permanentmagneten 27 sowie das Schaltelement 28 zwischen dem Rotor 9 und dem Permanentmagneten 27 auf.

Ferner erkennt man in der Figur 7 die Drehmomentstütze 21, mittels welcher der Stator 10 am Fahrzeugrahmen abgestützt ist.

Schließlich ist in der Figur 7 das Zapfenkreuz 23 wiederum schematisch dargestellt.

In der Figur 8 ist die Ausführungsform aus der Figur 7 nochmals in dreidimensionaler Ansicht schräg von oben gezeigt.

## Patentansprüche

1. Kraftfahrzeug
1.1 mit einem Antriebsmotor (1) und einem diesem im Kraftfluss nachgeschalteten Getriebe (2); wobei
1.2 das Getriebe (2) abtriebsseitig eine Getriebeausgangswelle (3) aufweist, über welche Antriebsleistung des Antriebsmotors (1) mittelbar auf Antriebsräder (4) des Kraftfahrzeugs übertragen wird;
1.3 mit einer Gelenkwelle (5), die an der Getriebeausgangswelle (3) unmittelbar oder mittelbar angeschlossen ist, um die Antriebsleistung von der Getriebeausgangswelle (3) über ein Achsgetriebe (6) oder dergleichen auf die Antriebsräder (4) zu übertragen;
1.4 mit einem Fahrzeugrahmen (7), an welchem der Antriebsmotor (1), das Getriebe (2), die Gelenkwelle (5) und die Antriebsräder (4) zumindest mittelbar aufgehängt oder gelagert sind;
1.5 mit einem hydrodynamischen Retarder, Elektromagnetretarder oder Permanentmagnetretarder (8), umfassend einen Rotor (9) und einen Stator (10), welche über einen hydrodynamischen Arbeitsmediumkreislauf oder ein Magnetfeld in eine drehmomentübertragende Verbindung schaltbar sind, sodass der Rotor (9) durch Drehmomentübertragung auf den Stator (10) abgebremst wird, wobei der Rotor (9) in einer Triebverbindung mit den Antriebsrädern (4) steht, um diese abzubremsen; wobei 1.6
der Rotor (9) außen auf der Gelenkwelle (5) montiert ist und durch diese getragen wird;
**dadurch gekennzeichnet, dass**
1.7 der Stator (10) mittels eines Retarderlagers (16) auf dem Rotor (9) relativgelagert ist und vom Rotor (9) getragen wird und sich über eine Drehmomentstütze (21) zumindest mittelbar am Fahrzeugrahmen (7) gegen Verdrehung abstützt.

2. Kraftfahrzeug gemäß Anspruch 1, **dadurch gekennzeichnet, dass** der Rotor (9) in Axialrichtung und Radialrichtung starr an der Gelenkwelle (5) angeschlossen ist.

3. Kraftfahrzeug gemäß einem der Ansprüche 1 oder 2, **dadurch gekennzeichnet, dass** der Rotor (9) mit einem vorbestimmten Abstand gegenüber beiden axialen Enden der Gelenkwelle (5), insbesondere im Bereich der axialen Mitte oder eines mittleren Drittels der Gelenkwelle (5), an der Gelenkwelle (5) montiert ist, oder der Rotor (9) auf einem axialen Ende der Gelenkwelle (5) montiert ist.

4. Kraftfahrzeug gemäß einem der Ansprüche 1 bis 3, **dadurch gekennzeichnet, dass** die Gelenkwelle (5) über ein Zwischenlager (11) im axialen Bereich zwischen ihren beiden Enden und mit Abstand hierzu, insbesondere im Bereich ihrer axialen Mitte oder eines mittleren Drittels, am Fahrzeugrahmen (7) insbesondere elastisch aufgehängt ist, und der Retarder (8) im Bereich des Zwischenlagers (11) angeordnet ist.

5. Kraftfahrzeug gemäß einem der Ansprüche 1 bis 3, **dadurch gekennzeichnet, dass** die Gelenkwelle (5) als Kreuzgelenkwelle ausgeführt ist, mit einem Kreuzgelenkwellenflansch (22), der ein Zapfenkreuz (23) trägt, und der Kreuzgelenkwellenflansch (22) eine oder mehrere in Radialrichtung hervorstehende Aufnahmen (24), die insbesondere am Kreuzgelenkwellenflansch (22) angeschmiedet ist/sind, aufweist, an welcher/welchen der Rotor (9) montiert, insbesondere angeschraubt ist.

6. Kraftfahrzeug gemäß einem der Ansprüche 1 bis 5, **dadurch gekennzeichnet, dass** der Rotor (9) den Stator (10) in Umfangsrichtung radial außen umschließt.

7. Kraftfahrzeug gemäß einem der Ansprüche 1 bis 6, **dadurch gekennzeichnet, dass** der Rotor (9) einen inneren Tragring (25) aufweist, der sich radial innerhalb des Stators (10) erstreckt und auf welchem der Stator (10) mittels des Retarderlagers (16) relativgelagert ist, insbesondere mittels eines zwischen dem Tragring (25) und dem Stator (10) angeordneten Wälzlagers.

8. Kraftfahrzeug gemäß Anspruch 7, **dadurch gekennzeichnet, dass** der Tragring (25) die Gelenkwelle (5), insbesondere einen zylindrischen Bereich derselben, mit einem Spiel oder Abstand umschließt.

9. Kraftfahrzeug gemäß einem der Ansprüche 1 bis 8, **dadurch gekennzeichnet, dass** der Retarder als Permanentmagnetretarder (8) ausgeführt ist, dessen Stator (10) eine Vielzahl von in Umfangsrichtung über der Drehachse (26) hintereinander mit alternierender Polung angeordneten Permanentmagneten (27) trägt und der Rotor (9) wenigstens einen oder mehrere den Permanentmagneten (27) zugewandte Bereiche aus magnetisierbarem Material umfasst, ferner mit einem Schaltelement (28) zwischen den Permanentmagneten (27) und dem wenigstens einen Bereich aus magnetisierbarem Material, wobei sich das Schaltelement (28) derart scheibenförmig, ringförmig oder ringsegmentförmig in Umfangsrichtung über der Drehachse (26) zwischen dem Rotor (9) und dem Stator (10) erstreckt, dass sich magnetisierbare Rückschlusselemente (29) mit nicht magnetisierbaren Zwischenelementen (30) des Schaltelementes (28) in der Umfangsrichtung abwechseln, und mit wenigstens einem Aktuator (31), mittels welchem die Permanentmagneten (27) gegenüber dem Schaltelement (28) und/oder das Schaltelement (28) gegenüber den Permanentmagneten (27) in der Umfangsrichtung wechselseitig verdrehbar ist/sind, um in einer ersten Position die Rückschlusselemente (29) den Permanentmagneten (27) gegenüberzustellen und in einer zweiten Position die Zwischenelemente (30) den Permanentmagneten (27) gegenüberzustellen.

10. Kraftfahrzeug gemäß einem der Ansprüche 1 bis 4 und insbesondere einem der Ansprüche 6 bis 9, **dadurch gekennzeichnet, dass** der Rotor (9) über eine auf die Gelenkwelle (5) geschobene Hülse, insbesondere Spannhülse (15), an der Gelenkwelle (5) montiert ist.

11. Kraftfahrzeug gemäß einem der Ansprüche 1 bis 9, **dadurch gekennzeichnet, dass** der Rotor (9) an einem an der Gelenkwelle (5) vorgesehenen Flansch (14) an der Gelenkwelle (5) montiert, insbesondere angeschraubt ist.

12. Kraftfahrzeug gemäß einem der Ansprüche 1 bis 11, **dadurch gekennzeichnet, dass** die Gelenkwelle (5), die insbesondere als Kreuzgelenkwelle mit zwei oder drei Gelenken (19) ausgeführt ist, die einzige Gelenkwelle zwischen dem Getriebe (2) und dem Achsgetriebe (6) oder zwischen dem Getriebe (2) und den Antriebsrädern (4) ist.

## Claims

1. A motor vehicle
1.1 with a drive motor (1) and a transmission (2) connected downstream thereof in the power flow; whereas
1.2 the transmission (2) includes a transmission output shaft (3) on the power take-off side, via which drive power of the drive motor (1) is transmitted indirectly to the drive wheels (4) of the motor vehicle;
1.3 with a cardan shaft (5), which is connected directly or indirectly to the transmission output shaft (3), in order to transmit the drive power from the transmission output shaft (3) to the drive wheels (4) via an axle drive (6) or similar;
1.4 with a vehicle frame (7), on which the drive motor (1), the transmission (2), the cardan shaft (5) and the drive wheels (4) are suspended or mounted at least indirectly;
1.5 with a hydrodynamic retarder, an electromagnetic retarder or a permanent magnetic retarder (8), including a rotor (9) and a stator (10), which can be engaged via a hydrodynamic working fluid circuit or a magnetic field in a torque-transmitting connection, so that the rotor (9) is braked down by the transmission of the torque on the stator (10), wherein the rotor (9) provides a drive connection with the drive wheels (4), so as to slow them down; whereas
1.6 the rotor (9) is mounted externally on the cardan shaft (5) and is carried by said shaft;
**characterised in that**
1.7 the stator (10) is relatively supported by a retarder bearing (16) on the rotor (9) and is carried by the rotor (9) and is protected against twisting via a torque support (21) at least indirectly on the vehicle frame (7).

2. A motor vehicle according to claim 1, **characterised in that** the rotor (9) is connected fixedly to the cardan shaft (5) in axial direction and radial direction.

3. A motor vehicle according to one of claims 1 or 2, **characterised in that** the rotor (9) is mounted on the cardan shaft (5) with a predetermined distance with respect to both axial ends of the cardan shaft (5), in particular in the region of the axial centre or of a central third of the cardan shaft (5), or the rotor (9) is mounted on an axial end of the cardan shaft (5).

4. A motor vehicle according to one of claims 1 to 3, **characterised in that** the cardan shaft (5) is suspended on the vehicle frame (7), in particular elastically, via an intermediate bearing (11) in the axial region between both its ends and at a distance therefrom, in particular in the region of their axial centre or of a central third, and the retarder (8) is arranged in the area of the intermediate bearing (11).

5. A motor vehicle according to one of claims 1 to 3, **characterised in that** the cardan shaft (5) is designed as a universal joint shaft, with a universal joint shaft flange (22), which carries a cross joint (23), and the universal joint shaft flange (22) presents one or several seats (24) protruding in radial direction which is/are forged on the universal joint shaft flange (22) in particular, against which the rotor (9) is assembled, in particular screwed on.

6. A motor vehicle according to one of claims 1 to 5, **characterised in that** the rotor (9) encloses the stator (10) radially and outwardly along the periphery.

7. A motor vehicle according to one of claims 1 to 6, **characterised in that** the rotor (9) includes an inner supporting ring (25), which extends radially inside the stator (10) and on which the stator (10) is relatively mounted via the retarder bearing (16), in particular by means of an anti-friction bearing arranged between the supporting ring (25) and the stator (10).

8. A motor vehicle according to claim 7, **characterised in that** the supporting ring (25) encloses the cardan shaft (5), in particular a cylindrical region thereof, with a play or an distance.

9. A motor vehicle according to one of claims 1 to 8, **characterised in that** the retarder is designed as a permanent magnetic retarder (8), whose stator (10) carries a plurality of permanent magnets (27) arranged behind one another with alternating polarity along the periphery via the rotational axis (26) and the rotor (9) includes at least one or several regions, made of magnetisable material, facing the permanent magnets (27), moreover with a switching element (28) between the permanent magnets (27) and the at least one region made of magnetisable material, whereas the switching element (28) extends in such a way in the form of a disc, of a ring or of an annular segment along the periphery via the rotational axis (26) between the rotor (9) and the stator (10), that magnetisable return elements (29) alternate with not magnetisable intermediate elements (30) of the switching element (28) around the periphery, and with at least one actuator (31), by means of which the permanent magnets (27) can be twisted with respect to the switching element (28) and/or the switching element (28) can be twisted with respect to the permanent magnets (27) around the periphery, in order, in a first position, to oppose the return elements (29) with respect to the permanent magnets (27) and in a second position the intermediate elements (30) with respect to the permanent magnets (27).

10. A motor vehicle according to one of claims 1 to 4 and in particular one of claims 6 to 9, **characterised in that** the rotor (9) is mounted on the cardan shaft (5) via a sleeve, in particular a clamping sleeve (15) slid on the cardan shaft (5).

11. A motor vehicle according to one of claims 1 to 9, **characterised in that** the rotor is mounted, in particular screwed on the cardan shaft (5), on a flange (14) provided on the cardan shaft (5).

12. A motor vehicle according to one of claims 1 to 11, **characterised in that** the cardan shaft (5), which is designed in particular as a universal joint shaft with two or three joints (19), forms the single cardan shaft between the transmission (2) and the axle drive (6) or between the transmission (2) and the drive wheels (4).

## Revendications

1. Véhicule automobile
1.1 ayant un moteur d'entraînement (1) et une transmission (2) connectée en aval dans le flux de force; dans lequel
1.2 la transmission présente un arbre de sortie de transmission (3) au niveau de la prise de force; par l'intermédiaire de laquelle la puissance d'entraînement du moteur d'entraînement (1) est transmise indirectement aux roues d'entraînement (4) du véhicule automobile;
1.3 ayant un arbre articulé (5), connecté directement ou indirectement à l'arbre de sortie de transmission (3), pour transmettre la puissance d'entraînement de l'arbre de sortie de transmission (3) par le biais d'une transmission d'essieu (6) ou autres aux roues d'entraînement (4);
1.4 avec un châssis de véhicle (7), au niveau duquel le moteur d'entraînement (1), la transmission (2), l'arbre articulé (5) et les roues d'entraînement (4) sont suspendus ou montés au moins indirectement;
1.5 avec un retardateur hydrodynamique, un retardateur à électroaimant ou un retardateur à aimant permanent (8), comprenant un rotor (9) et un stator (10), éléments pouvant être connectés par le biais d'un circuit de fluide de travail hydrodynamique ou d'un champ magnétique pour obtenir une liaison de transmission de couple de rotation, de sorte que le rotor (9) est freiné par transmission de couple de rotation au stator (10), où le rotor (9) est en liaison motrice avec les roues d'entraînement (4), afin de freiner ces dernières; dans lequel
1.6 le rotor (9) est monté à l'extérieur sur l'arbre articulé (5) et est porté par celui-ci;
**caractérisé en ce que**
1.7 le stator (10) est monté de manière relative sur le rotor (9) à l'aide d'un palier retardateur (16), est porté par le rotor (9) et s'appuie au moins indirectement sur le châssis de véhicle (7) par le biais d'un support de couple de rotation (21).

2. Véhicule automobile selon la revendication 1, **caractérisé en ce que** le rotor (9) est fixé à demeure au niveau de l'arbre articulé (5) dans la direction axiale et la direction radiale.

3. Véhicule automobile selon l'une quelconque des revendications 1 ou 2, **caractérisé en ce que** le rotor (9) est monté au niveau de l'arbre articulé (5) avec un écartement prédéterminé par rapport aux deux extrémités axiales de l'arbre articulé (5), en particulier dans la zone du centre axial ou d'un tiers médian de l'arbre articulé (5) ou le rotor (9) est monté sur une extrémité axiale de l'arbre articulé (5).

4. Véhicule automobile selon l'une quelconque des revendications 1 à 3, **caractérisé en ce que** l'arbre articulé (5) est suspendu par le biais d'un palier intermédiaire (11) dans la zone axiale entre ses deux extrémités et à une certaine distance en particulier dans la zone de leur centre axial ou d'un tiers médian, au niveau du châssis de véhicule (7), en particulier de manière élastique, et le retardateur (8) est disposé dans la zone du palier intermédiaire (11).

5. Véhicule automobile selon l'une quelconque des revendications 1 à 3, **caractérisée en ce que** l'arbre articulé (5) est conçu comme arbre de transmission à joint de cardan, pourvu d'une bride d'arbre de transmission à joint de cardan (22), portant un croisillon (23), et que la bride d'arbre de transmission à joint de cardan (22) présente un ou plusieurs réceptacles (24) en saillie dans la direction radiale, lesquels sont soudés au niveau de la bride d'arbre de transmission à joint de cardan (22), au niveau desquels le rotor (9) est monté, en particulier par vissage.

6. Véhicule automobile selon l'une quelconque des revendications 1 à 5, **caractérisé en ce que** le rotor (9) entoure le stator (10) radialement à l'extérieur dans le sens de la circonférence.

7. Véhicule automobile selon l'une quelconque des revendications 1 à 6, **caractérisé en ce que** le rotor (9) présente une bague porteuse interne (25), qui s'étend radialement à l'intérieur du stator (10) et sur laquelle le stator (10) est monté de manière relative à l'aide du palier retardateur (16), en particulier à l'aide d'un palier de roulement disposé entre la bague porteuse (25) et le stator (10).

8. Véhicule automobile selon la revendication 7, **caractérisé en ce que** la bague porteuse (25) entoure l'arbre articulé (5), en particulier une zone cylindrique de celui-ci, avec un jeu ou un écartement.

9. Véhicule automobile selon l'une quelconque des revendications 1 à 8, **caractérisé en ce que** le retardateur est conçu comme retardateur à aimant permanent (8), dont le stator (10) porte une pluralité d'aimants permanents (27) disposés l'un derrière l'autre avec polarité alternée dans le sens de la circonférence sur l'axe de rotation (26) et le rotor (9) comporte au moins un ou plusieurs zones dirigées vers les aimants permanents (27), zones composées de matériau magnétisable, compenant en outre un élément de commutation entre les aimants permanents (27) et ladite au moins une zone composée de matériau magnétisable, où l'élément de commutation (28) s'étend en forme de disque, en forme d'anneau ou en forme de segment annulaire dans le sens de la circonférence sur l'axe de rotation (26) entre le rotor (9) et le stator (10), que des éléments d'inférence magnétisables alternent avec des éléments intermédiaires magnétisables (30) de l'élément de commutation (28) dans la direction circonférentielle, et comportant au moins un actionneur (31), grâce auquel les aimants permanents (27) sont rotatifs par rapport à l'élément de commutation (28) et/ou l'élément de commutation (28) est rotatif de façon alternée par rapport aux aimants permanents (27) dans la direction circonférentielle, pour opposer dans une première position les éléments d'inférence (29) aux aimants permanents (27) et pour opposer dans une seconde position les éléments intermédiaires aux aimants permanents (27).

10. Véhicule automobile selon l'une des revendications 1 à 4 et en particulier l'une revendications 6 à 9, **caractérisé en ce que** le rotor (9) est monté sur une douille repousée sur l'arbre articulé (5), en particulier une douille de serrage (15) au niveau de l'arbre articulé (5).

11. Véhicule automobile selon l'une quelconque des revendications 1 à 9, **caractérisé en ce que** le rotor (9) est monté au niveau de l'arbre articulé (5) sur une bride (14) prévue sur l'arbre articulé (5), en particulier par vissage.

12. Véhicule automobile selon l'une quelconque des revendications 1 à 11, **caractérisé en ce que** l'arbre articulé (5), qui est en particulier conçu sous forme de croisillon avec deux ou trois articulations (19), constitue le seul arbre articulé entre la transmission (2) et la transmission d'essieu (6) ou bien entre la transmission (2) et les roues d'entraînement (4).
